# EUROPEAN PATENT APPLICATION

(11) **EP 2 746 986 A1**
(43) Date of publication of application: **25.06.2014**
(21) Application number: 12290449.3
(22) Date of filing: 19.12.2012
(51) Int. Cl.: G06K 7/00, G06Q 10/08, G08B 13/14, G06K 19/077, H01Q 1/22, G06K 19/02, B42D 1/00, G09B 5/00

(54) **Method of detecting opening of a page in a book**

(71) Applicant: Alcatel Lucent, 75007 Paris (FR)
(72) Inventor: Templ, Wolfgang, 74372 Sersheim (DE)
(74) Representative: DREISS Patentanwälte PartG mbB

(57) **Abstract**

A page opening detecting system, comprising:
- RFID tags (8, 9) attached to sheets (2, 3) arranged in a book-like object (1);
- a reading device (6) for reading the RFID tags (8, 9);
- RF shielding members (10-12) attache to the sheets (2, 3) for electromagnetically shielding the RFID tags (8, 9) from radiofrequency signals (7), wherein
the RFID tags (8, 9) are unreadable by the RFID reading device (6) due to being electromagnetically shielded in a closed status of the book-like object (1); and wherein
an RFID tag (8, 9) is readable upon removing one of the RF shielding members (10-12) by opening one of the two distinct sheets (2, 3) of the book-like object (1).

## Description

The invention relates to a page opening detecting system and a method for detecting an opening of page of the book-like object.

### BACKGROUND ART

It is a frequent interest of editors and authors of printed media to learn about the way how customers use and perceive their media products. As an example, in order to optimize a user manual, it may be of interest to an automotive manufacturer to receive feedback about how often customers consult the manual, and how long they would stay with a particular page or chapter.

### DESCRIPTION

The phrase "book-like device", as used in this application, shall be understood particularly as an ensemble of individual sheets that is arranged and usually kept in an intended sequence. In particular, book-like devices shall encompass hardback books, paperbacks, brochures, leaflets, magazines and sheets in ring binders.

In one embodiment, a page opening detecting system is disclosed for detecting an opening of a book-like device at a certain page.

In an embodiment, a page opening detecting system may be realized by using at least two radio-frequency identification (RFID) tags that are attachable to two distinct sheets that are successively arranged in a book-like object, wherein each sheet establishes two successive pages of the book-like object;
- an RFID reading device provided for reading out the at least two RFID tags;
- at least two radio-frequency (RF) shielding members, each of the two RF shielding members being attachable to one of the two distinct sheets and being provided for electromagnetically shielding at least one of the at least two RFID tags from radiofrequency waves in at least one status of the book-like object towards at least one direction, wherein
the at least two RFID tags are unreadable by the RFID reading device due to being electromagnetically shielded by the at least two RF shielding members in a closed status of the book-like object; and
wherein at least one of the two RFID tags is readable by the RFID reading device upon removing at least one of the RF shielding members by opening at least one of the two distinct sheets of the book-like object.

By that, it can be accomplished to detect any opening and closing of the book-like object at any page that is equipped with an RFID tag. In a suitable embodiment, also multiple opening of the book-like object at different pages can be detected.

According to an embodiment, each RFID tag comprises specific data concerning the sheet that the RFID tag is attachable to. The specific data may include a page number, an identification code concerning a type of the book-like object, a version number of the book-like object, an origin of the book-like object, a memory address, a (hyper-)link to a memory unit in which specific data is stored as an indirect reference, or similar data. Thus, quite specific information on the book-like object that has been opened and the specific page of the book-like object that it was opened at can be readily available.

In another embodiment, the RFID tags are printed on the sheets of the book-like object. By that, a very cost-effective solution for a page opening detecting system can be provided.

In a further embodiment, each of the RF shielding members provides an RF attenuation in the at least one direction of at least 6 dB in amplitude at an RF operating frequency of the RFID reading device. An RF attenuation of 6 dB lowers an amplitude of the RF electromagnetic field behind the RF shielding member to one half of the amplitude of the RF electromagnetic field in front of the RF shielding member. This can assure that the at least two RFID tags are unreadable by the RFID reading device in a closed status of the book-like object. A higher RF attenuation than 6 dB is beneficial by making the solution more robust. The RF shielding members may be designed as metal foils, in particular aluminum foils, adapted to dimensions of the RFID tag.

In yet another embodiment, the page opening detecting system comprises a data communication device providing at least one data communication path for transferring data between the page opening detecting system and an external data collection unit. In this way, data collected by the RFID reading device can readily be centrally collected and evaluated.

The data communication path may be wireless. This can provide a page opening detecting system that is easy to use and avoids cumbersome wiring. The wireless data communication path may be based on any wireless data communication standard, like Bluetooth, that appears to be suitable to the one skilled in the art.

In still another embodiment, the page opening detecting system comprises a clock unit for registering reading events of the RFID reading device with regard to time. This allows for registering the additional information of the duration of a reader staying with a particular page of the book-like object. The clock unit may be located remote from the RFID reading device. In this case, means for the RFID reading device to access the clock unit have to be provided. It is another object of the invention to provide a method for detecting an opening of a page of a book-like object.

The method comprises steps of:
- attaching at least one RFID tag each to two successively arranged sheets of the book-like object, wherein each sheet establishes two successive pages of the book-like object;
- attaching at least one RF shielding member each to the two successively arranged sheets of the book-like object such that in a closed status of the book-like object, each one of the RFID tags is electromagnetically shielded by at least one RF shielding member in at least one direction;
- removing at least one of the RF shielding members by opening the page of the book-like object; and
- reading out at least one of the unshielded RFID tags with an RFID reading device.

RFID tags may also be attached at the inside of a cover of the book-like object, so that an opening of the book-like object at the first page or the last page can be detected.

The method may allow for detecting any opening and closing of the book-like object at any page that is equipped with an RFID tag.
If the method further comprises the step of registering successive events of reading out RFID tags with regard to time, the duration of a reader reading or looking at an opened page can be determined.

In an embodiment, the method comprises a step of generating a prompt signal to a human interface device that has to be confirmed by the reader for authorizing the step of transferring data from the RFID reading device to an external data collection unit. By this, privacy of the reader can be insured, and any conflict concerning and undesired collection of private data can be avoided.

These and other aspects of the invention will be apparent from and elucidated with reference to the embodiments described hereinafter.

### BRIEF DESCRIPTION OF THE DRAWINGS

In the drawings:
Fig. 1 schematically illustrates an embodiment of a page opening detecting system;
Fig. 2 schematically shows a configuration of RFID tags of the page opening detecting system pursuant to Fig. 1 in a book; and
Fig. 3 shows a schematic exploded view of a configuration of RFID tags and RF shielding members of the page opening detecting system pursuant to Fig. 1.

### DETAILED DESCRIPTION

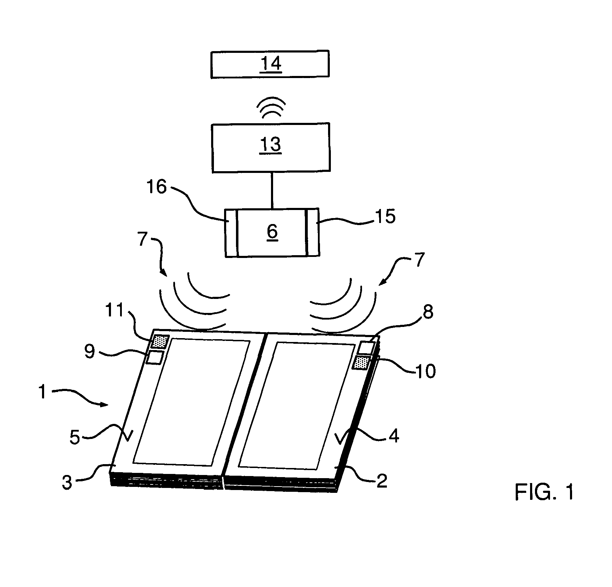

Fig. 1 schematically illustrates an embodiment of a page opening detecting system applied to a book-like object 1 that is designed as an operational manual for a passenger car.

The page opening detecting system comprises a plurality of RFID tags, of which two RFID tags 8, 9 are exemplarily shown that are attached to a plurality of sheets, of which two sheets 2, 3 are exemplarily shown. The sheets 2, 3 are successively arranged in the book-like object 1. The RFID tags 8, 9 are attached to the sheets 2, 3 by a printing process. Each sheet 2, 3 of the operational manual establishes two successive pages of the book-like object 1, with a preceding page established by a front face 4 of the sheet 2, 3, and a successive page established by a back face 5 of the sheet 2, 3. The preceding pages are labeled with an odd page number, and the successive pages are labeled with an even page number.

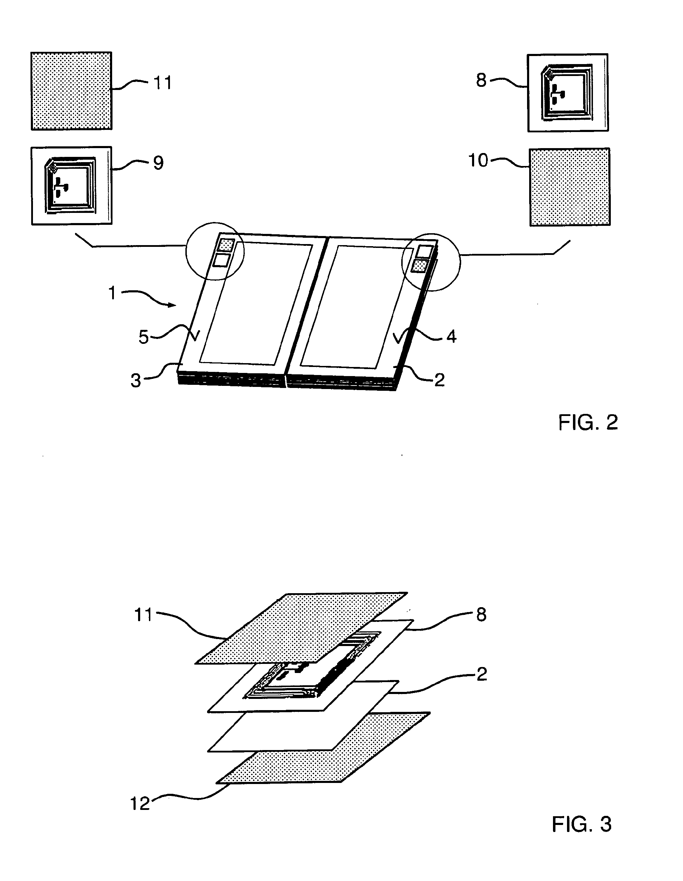

Each sheet 2, 3 of the plurality of sheets of the book-like object 1 is equipped with two RFID tags 8, 9, wherein a first one 8 of the RFID tags 8, 9 is attached to a right margin of an odd-numbered page of the sheet 2, and a third one of the RFID tags is attached to a left margin of an even-numbered page of the sheet 2 (not shown in Fig. 3).

Further, the page opening detecting system comprises a plurality of RF shielding members 10-12 designed as thin aluminum foils with dimensions that at least equal those of the RFID tags 8, 9. Alternatively, dimensions of the RF shielding members 10-12 could be selected larger than those of the RFID tags 8, 9.

Fig. 2 schematically shows a configuration of the RFID tags 8, 9 and the RF shielding members 10-12 that are attached to two successive pages of two distinct sheets 2, 3 of the book-like object 1. On the right margin of the odd-numbered page of the sheet 2 to the right, a first RF shielding member 10 is arranged below the first RFID tag 8. On the left margin of the preceding even-numbered page of the sheet 3 to the left, a second RF shielding member 11 is arranged above the second RFID tag 9. All of the even-numbered pages of the sheets of the book-like object 1 are furnished with RFID tags and RF shielding members that are arranged in an identical manner, and all of the odd-numbered pages of the sheets of the book-like object 1 are furnished with RFID tags and RF shielding members that are arranged in an identical manner.

The page opening detecting system shown in Fig. 1 further comprises an RFID reading device 6 that is provided for reading out the plurality of RFID tags 8, 9 by emitting an RF signal 7 that energizes the RFID tags 8, 9. This technique is well known to the one skilled in the art and shall therefore not be described in further detail herein.

Fig. 3 shows a schematic exploded view of a configuration of the first RFID tag 8 and a third RF shielding member 12 attached to the front face 4 and the back face 5 of the right sheet 2, respectively, and of the second RF shielding member 11 attached to the back face 5 of the sheet 3 in a closed state of the book-like object 1. In Fig. 3, the sheet 3 is omitted for clarity purposes.

As is illustrated in Fig. 2, the first RFID tag 8 is attached to the right margin of the odd-numbered page of the right sheet 2. Attached to the left margin of the even-numbered page of the right sheet 2 and arranged opposite of the first RFID tag 8 with the sheet 2 in between is the third RF shielding member 12 that is provided for electromagnetically shielding the first RFID tag 8 from the radio frequency signal 7 towards a direction from the successive sheets, in a closed status of the book-like object 1. Each of the RF shielding members 10-12 provides an RF attenuation of more than 12 dB in amplitude in a direction that is perpendicular to the metal foil and at an RF operating frequency of the RFID tags 8, 9.

In a closed state of the book-like object 1, the left sheet 3 lies on top of the right sheet 2. In this configuration, the second RF shielding member 11 lies on top of the first RFID tag 8, as shown in Fig. 3, thereby effectively shielding the first RFID tag 8 from the radio frequency signal 7 towards a direction from the preceding sheets of the book-like object 1.

By that, in a closed state of the book-like object 1, all the RFID tags 8, 9 of the plurality of RFID tags are electromagnetically shielded from the radio frequency signal 7 by the RF shielding members 10-12 towards two directions, and are therefore unreadable by the RFID reading device 6.

When the book-like object 1 is opened from the closed status between two distinct sheets 2, 3 as shown in Figs. 1 and 2, the first RF shielding member 10 and the second RF shielding member 11 are removed from the RFID tags 8, 9 they have shielded as long as the book-like object 1 resided in the closed status. Thereby, both the first RFID tag 8 and the second RFID tag 9 have become readable by the RFID reading device 6 upon removing the RF shielding members 10, 11 by opening the book-like object 1.

Upon opening the book-like object 1, the RFID reading device 6 is provided to read out the specific data that is resident in each of the readable RFID tags 8, 9 that are attached to one of the sheets 2, 3. The specific data concerning the sheet 2, 3 include an identification code unique to the editing version of the book-like object 1, and a number of the page that the respective RFID tag is attached to. In case of an indirect reference deposited in one of the RFID tags 8, 9, data are copied from that indirect reference, and are as well read out by the RFID reading device 6.

As is illustrated in Fig. 1, the page opening detecting system comprises a data communication device 13 that is integrated in a car and is compatible to the Bluetooth technology standard. The data communication device 13 provides a wireless data communication path for transferring the specific data that has been read out by the RFID reading device 6 from the RFID tags 8, 9 to an external data collection unit 14 which is designed as a server of an authorized car repair shop. The RFID reading device 6 comprises a human interface device 15. After reading out data from the RFID tags 8, 9, the RFID reading device 6 generates a prompt signal to the human interface device 15. A reader of the book-like object 1 has to confirm the prompt signal for authorizing the RFID reading device 6 for transferring data to the external data collection unit 14. If the prompt signal is not confirmed by the reader, data are read out by the RFID reading device 6 and stored in a memory unit of the data communication device 13 but are not transferred to the external data collection unit 14.

The RFID reading device 6 includes a clock unit 16 for registering reading events by the RFID reading device 6 with regard to time. When the specific data read out from the RFID tags 8, 9 is transferred to the server, the RFID reading device 6 adds a time stamp from its clock unit 16 such that the data readout becomes an event that is related to a point in time.

When the reader, after having consulted the first page for some time, flips to a second page on another sheet of the book-like object 1, in principle two options exist:
a) The first page is closed again. The first RF shielding member 10 again shields the second RFID tag 9, and the second RF shielding member 11 again shields the first RFID tag 8, so both RFID tags 8, 9 become unreadable to the RFID reading device 6. The time that has passed between opening the book-like object 1 at the first page and at the second page corresponds to the duration during which the reader had been consulting the first page. Two different RFID tags become readable to the RFID reading device 6, which by that registers the two openings of the book-like object 1 at two different pages as two successive events of reading out RFID tags with regard to time.
b) The first page consulted before remains open, and the second page of the book-like object 1 is opened in addition. Then, two more RFID tags of the plurality of RFID tags become readable to the RFID reading device 6, which reads out data from all four readable RFID tags. In this way, it is detected that the reader is consulting two pages of the book-like object 1 at the same time, which might indicate that the reader is relating the contents of the two pages to each other.

While the invention has been illustrated and described in detail in the drawings and foregoing description, such illustration and description are to be considered illustrative or exemplary and not restrictive; the invention is not limited to the disclosed embodiments.

Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

## Claims

1. A page opening detecting system, comprising:
- at least two RFID tags (8, 9) that are attachable to two distinct sheets (2, 3) that are successively arranged in a book-like object (1), wherein each sheet (2, 3) establishes two successive pages of the book-like object (1);
- an RFID reading device (6) provided for reading out the at least two RFID tags (8, 9);
- at least two RF shielding members (10-12), each of the two RF shielding members (10-12) being attachable to one of the two distinct sheets (2, 3) and being provided for electromagnetically shielding at least one of the at least two RFID tags (8, 9) from radiofrequency signals (7) in at least one status of the book-like object (1) towards at least one direction, wherein
the at least two RFID tags (8, 9) are unreadable by the RFID reading device (6) due to being electromagnetically shielded by the at least two RF shielding members (10-12) in a closed status of the book-like object (1); and wherein
at least one of the two RFID tags (8, 9) is readable by the RFID reading device (6) upon removing at least one of the RF shielding members (10-12) by opening at least one of the two distinct sheets (2, 3) of the book-like object (1).

2. The page opening detecting system as claimed in claim 1, wherein each RFID tag (8, 9) comprises specific data concerning the sheet (2, 3) that the RFID tag (8, 9) is attachable to.

3. The page opening detecting system as claimed in claims 1 to 2, wherein the RFID tags (8, 9) are printed on the sheets (2, 3) of the book-like object (1).

4. The page opening detecting system as claimed in one of the preceding claims, wherein each of the RF shielding members (10-12) provides an RF attenuation in the at least one direction of at least 6 dB in amplitude at an RF operating frequency of the RFID reading device (6).

5. The page opening detecting system as claimed in one of the preceding claims, further comprising a data communication device (13) providing at least one data communication path for transferring data between the page opening detecting system and an external data collection unit (14).

6. The page opening detecting system as claimed in claim 5, wherein the data communication path is wireless.

7. The page opening detecting system as claimed in one of the preceding claims, further comprising a clock unit (16) for registering reading events of the RFID reading device (6) with regard to time.

8. A method for detecting an opening of a page of a book-like object (1), the method comprising steps of:
- attaching at least one RFID tag (8, 9) each to two successively arranged sheets (2, 3) of the book-like object (1), wherein each sheet (2, 3) establishes two successive pages of the book-like object (1);
- attaching at least one RF shielding member (10-12) each to the two successively arranged sheets (2, 3) of the book-like object (1) such that in a closed status of the book-like object (1), each one of the RFID tags (8, 9) is electromagnetically shielded by at least one RF shielding member (10-12) in at least one direction;
- removing at least one of the RF shielding members (10-12) by opening the page of the book-like object (1); and
- reading out at least one of the unshielded RFID tags (8, 9) with an RFID reading device (6).

9. The method as claimed in claim 8, further comprising a step of:
- registering successive events of reading out RFID tags (8, 9) with regard to time.

10. The method as claimed in claim 8 or 9, further comprising a step of:
- generating a prompt signal to a human interface device (15) that has to be confirmed by a reader for authorizing a step of transferring data from the RFID reading device (6) to an external data collection unit (14).
